# EUROPEAN PATENT SPECIFICATION

(11) **EP 1 607 287 B1**
(45) Date of publication and mention of the grant of the patent: **14.02.2007**
(21) Application number: 04013909.9
(22) Date of filing: 14.06.2004
(51) Int. Cl.: B60R 22/46

(54) **Safety apparatus**
Sicherheitsvorrichtung
Dispositif de sécurité

(43) Date of publication of application: 21.12.2005
(73) Proprietor: Marshall, Steve, 13357 Berlin (DE)
(72) Inventor: Marshall, Steve, Low Seaton Cumbria CA14 1PP (GB); Jungbauer, Peter, 86556 Unterbernbach (DE); Adomeit, Julius, 14195 Berlin (DE); Adomeit, Heinz-Dieter, Dr.-Ing., 10623 Berlin (DE)
(74) Representative: Manitz, Finsterwald & Partner GbR

(56) References cited:
- US-A- 4 508 287
- US-A- 4 508 288
- US-A- 4 750 686
- US-B1- 6 454 199

## Description

The invention relates to a safety apparatus in particular for motor vehicles, having a safety belt and a spool movable between a blocked position and a released position for the winding up and unwinding of the belt.

In normal operation such belt systems ensure problem-free spool rotation in both directions in order to make wearing of the belt comfortable for the user. Various operating principles are known on which existing belt systems are based. The present application relates to systems with a "floating" spool (engl.: "floating spool"), i.e. with the spool movable between a blocked position and a released position. In the blocked position a rotation of the spool in the belt let-out direction is not possible, i.e. when the spool is in a blocked position the belt system fulfils its actual safety function: A vehicle occupant falling into the belt during an accident is held back by the blocked reel, i.e. by the reel which is blocked in the unwinding direction. In contrast, in the released position the spool can be rotated in both directions.

Belt retention systems which are based on the "floating spool" principle have been known for a long time. The mounting of the floating spool can in this connection take place in different ways and by different means. The spool can for example be freely movable within a restricted range, for example be guided along a predetermined track in coercive guides formed for example as cam tracks or can be pivotally mounted. The movement of the spool out of the released position into the blocked position takes place via the belt itself, whereas the movement of the spool back into the released position takes place as a result of its own weight or with the aid of resetting devices operating for example with springs.

Known safety belt systems with floating spools operate reliably and satisfactorily from every point of view and are used in large numbers in vehicle construction, in particular as a result of their simple layout and their robustness. The "floating spool" systems are able to satisfy without problem the demands placed on them in accordance with which the spool must adopt the blocked position from a specific vehicle acceleration onwards and also from a specific belt acceleration onwards.

Safety belt systems are increasingly being provided with further functions. Such additional functions are in particular a pretensioning function and a load or force limiting function.

Pretensioners serve to drive the reel in the belt take-up direction within a short period of time of for example 10 ms following the establishment of an accident situation in order to remove the so-called belt slackness, i.e. to tension the belt, so that the safety belt can ideally satisfy its retention function when the vehicle occupant falls into the belt as a result of inertia following belt tensioning.

Load limiting devices, which are in particular known in the form of torsion bars connected to the spool, serve to permit a restricted spool rotation in the belt let-out direction when the spool is actually blocked in order to reduce the peak loads which act on the vehicle occupant when falling into the belt as a result of inertia.

As a result of the restricted belt let-out the load limiting devices also permit a certain forward movement of the vehicle occupant which is why a combination of belt tensioning and load limiting has a particular importance in modem safety belt systems: An ideal load limiting is first made possible at all by the possibility of pretensioning the belt.

The provision of belt systems operating in accordance with the floating spool principle with pretensioners and load limiting devices has hitherto been refrained from, because it is regarded as practically impossible to handle a floating spool in this way in a reliable manner and in a manner which satisfies all safety requirements.

The object of the invention is to further develop a safety apparatus of the initially named kind, i.e. a belt system based on the "floating spool" principle, in such a way that additional functions, in particular a pretensioning function and/or a load limiting function, can be integrated without impairing the ability of the apparatus to operate satisfactorily.

The solution of this object takes place in accordance with the invention by the features of claim 1 and in particular in that the safety apparatus has a pretensioner with which the spool can be driven in the wind-up direction, with the pretensioner having a drive arrangement with which the spool can be set rotating at two engagement positions spaced apart along the spool axis.

The invention is characterized in that the spool is not driven at one end but rather the drive arrangement cooperates with the spool at a plurality of axially spaced positions. The danger of tilting of the floating spool which exists with only one ended loading can be reliably avoided by the invention.

A common drive source is provided for two drive trains which can each be brought into engagement with one of the engagement positions of the spool. An arrangement of this kind can automatically ensure a symmetrical or synchronized driving of the spool via the two engagement positions.

Through the invention a belt system operating in accordance with the "floating spool" principle can be provided for the first time with a pretensioner which is made possible by distributing the spool drive to a plurality of engagement positions. Moreover, this distribution of the spool drive leads to an advantageous distribution of the spool loading. With two points of engagement spaced apart along the spool axis the loading at each point of engagement is reduced by 50 % in comparison to a one-ended spool drive. Expressed simply, the axial extent of the spool is exploited by the invention not only to enable the use of a pretensioner per se but rather also to distribute the forces which are to applied by the pretensioner along the spool axis and in this manner to avoid high local mechanical loadings. A further advantage of the force distribution lies in the fact that the individual components can be dimensioned to be less robust. In particular, the use of favourably priced material, such as for example plastics, is hereby enabled in areas in which this was previously considered inconceivable.

Further preferred embodiments of the invention are also set forth in the dependent claims, in the description and in the drawings.

The spool and the drive arrangement are preferably symmetrically constructed with respect to the axial direction, i.e. the points of engagement are spaced by the same distance from a plane of symmetry extending perpendicular to the spool axis. Furthermore, provision is preferably made for the points of engagement to be arranged at the axial end regions of the spool.

In addition, the drive arrangement in accordance with the arrangement is preferably designed such that a spool is held in the released position by the engaged drive arrangement. In this way the spool drive itself ensures that the spool can not move back into the blocked position during belt tensioning.

Furthermore, provision is made in accordance with the invention that the spool is movable from the blocked position into the released position by means of the drive arrangement entering into engagement. In this way it is again the spool drive itself which ensures that the spool is located in the released position during the belt tensioning and that the spool is automatically moved before the start of the pretensioning procedure from the blocked position into the released position, should the spool be located in the blocked position at the instant of initiation of the pretensioning procedure.

Specific examples for the practical realization of the invention will be discussed in more detail later in connection with the drawings. The specific embodiments are in particular characterized in that they realize various basic principles or contain basic aspects which can be combined with one another in diverse ways.

Thus, the movement of the drive arrangement into engagement with the spool can be selected independently of the specific design of the drive arrangement. For example, an engagement movement taking place in the radial or tangential direction can be realized using both racks which cooperate directly with a drive pinion of the spool and also in combination with cable drums of a cable arrangement.

Preferred basic principles and basic concepts are set forth in the dependent claims which can be realized individually or in combination in a specific safety apparatus in accordance with the invention.

Thus, as an alternative to a radial or tangential engagement movement, as mentioned above, the drive arrangement can also enter into engagement with the spool by a movement taking place in the axial direction.

In one variant not covered by the invention the drive arrangement can have two separate drive sources which can each be brought via its own drive arrangement into engagement with one of the engagement positions of the spool. A synchronous spool drive can be achieved via the two axially spaced apart engagement positions by simultaneous control of the two drive sources.

In accordance with a further preferred design of the invention a drive arrangement can have at least one drivable rack the movement of which can be converted into a rotation of the spool. A rack drive of this kind can be used as a direct spool drive, for example in that a drive pinion sitting on the spool axle or forming the spool axle directly cooperates with the rack and is set into rotation by the movement of the rack. Alternatively, the drivable rack can be used as the drive for a cable arrangement which serves to set the spool or a drive pinion of the spool into rotation.

When the drive arrangement has a drivable cable arrangement then provision is preferably made for at least one cable drum, which can be brought directly into engagement with the spool or indirectly via a gear arrangement, to be rotatable in the cable let-out direction by means of the cable arrangement.

In this connection the cable drum can be controlled to enter into engagement with the spool by means of the cable arrangement by pivotal movement about an axis extending parallel to and off-set from the spool axis. In an alternative embodiment provision is made that the cable drum can be brought into engagement with the spool by means of the cable arrangement by an axial movement along the spool axis. In this arrangement the cable drum and the spool can be arranged concentric to one another. In particular provision can be made for an initial rotary movement of the cable drum to be converted via a screw connection into the axial movement of the cable drum.

The cable arrangement can include two cable drums which can be brought into engagement with the spool, which stand in connection with a common drive drum via the cable and which are rotatable in the cable let-out direction by means of the drive drum which is set rotating in the cable take-up direction.

In a preferred embodiment of the invention the drive arrangement includes at least one gas generator disposed in a piston and cylinder system as a drive source.

Any arrangement will be understood as a piston and cylinder system in the sense of the invention which, through initiation of the drive source, in particular by triggering of the gas generator, involves a relative movement between a pipe system forming the cylinder in which the drive source is arranged and a piston guided at the pipe system. In this connection the piston can be disposed inside or outside of the cylinder. In particular, the piston can be inserted into a cylinder section or can be pushed onto a cylinder section.

The piston which can be driven by means of the gas generator can be formed as a rack. As an alternative, or in addition, the piston, which can be driven by means of the gas generator, can be connected to a cable arrangement and can in particular serve as a drive source to set a cable drum around which a cable is wound rotating via the cable.

In a particularly preferred embodiment of the invention the drive arrangement includes a piston and cylinder system, in particular a symmetrically designed piston and cylinder system which includes two pistons respectively arranged at one cylinder section and a common gas generator which stands in connection with the two cylinder sections.

The pretensioner is preferably formed in such a way that it stands out of engagement with the spool in a normal operating state. Furthermore, provision is preferably made for the pretensioner to be moved out of engagement with the spool after pretensioning has taken place.

In this way it is ensured that the pretensioner is only in engagement with the spool when necessary and the function of the safety apparatus is otherwise not impaired by the pretensioner.

In addition to the pretensioner the belt system in accordance with the invention can also have a load limiting device which permits a restricted rotation of the spool in the blocked position. In particular provision is made for the load limiting device and the pretensioner to cooperate with the spool independently of one another.

The invention will be described in the following by way of example and with reference to the drawing in which are shown:
- Figs. 1a - 1c: various views of a first example of a safety apparatus not covered by the invention,
- Figs. 2a - 2c: various views of a second embodiment of a safety apparatus in accordance with the invention,
- Figs. 3a - 3c: various views of a third embodiment of a safety appara tus in accordance with the invention,
- Figs. 4a and 4b: various views of a fourth embodiment of a safety apparatus in accordance with the invention,
- Figs. 5a - 5c: various views of a fifth embodiment of a safety apparatus in accordance with the invention, and
- Figs. 6a - 6d: various views of a sixth embodiment of a safety apparatus in accordance with the invention.

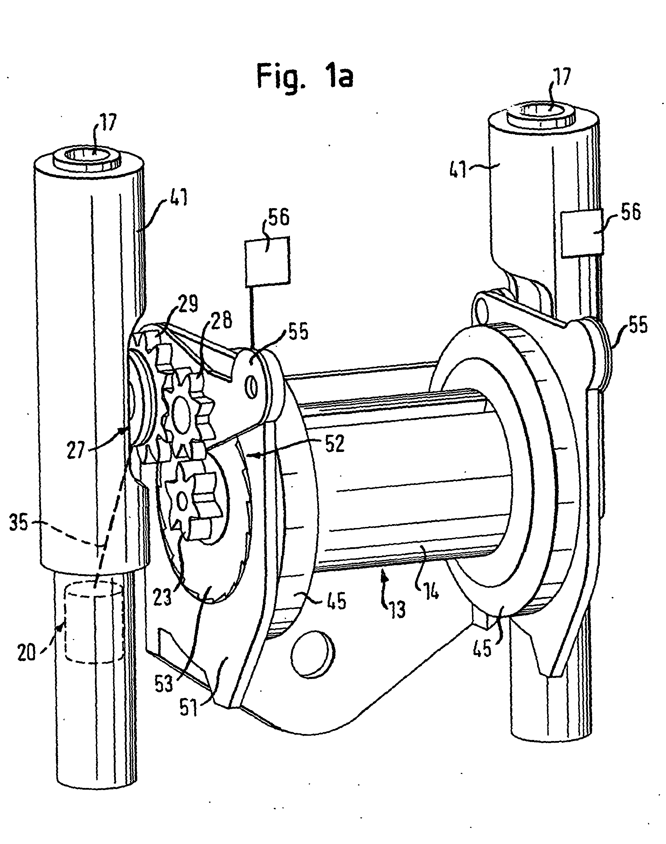

The safety apparatus shown in Figs. 1a - 1c without the housing cover includes a substantially U-shaped frame 51 on which a spool 13 for a non-illustrated safety belt is floatingly mounted, the safety belt being wound onto a spool reel 14. The spool 13 includes a through-going drive pinion 23 which forms the spool axis and with which a blocking gear 53 is rotationally fixedly connected in each axial end region.

The blocking gear 53 is provided with external saw-tooth like teeth which block in the belt let-out direction and which cooperate with corresponding mating teeth 52 of the frame 51 when the spool 13 is located in a blocking position. The mating teeth 52 bound an aperture which differs from a circular shape only in an upper peripheral region, the aperture being formed in the relevant U-limb of the frame 51 for the blocking gear 53.

The pretensioner for the spool 13, which is floatingly mounted in this manner at the frame 51 in its apertures, includes two separate drive trains of the same design which each include a gas generator 17 arranged in a cylinder 41, a piston 20 which is simply indicated in broken lines within the cylinder 41 and also a gear arrangement 28, 29 which is mounted on a pivotal lever 55 which is pivotable about an axis extending parallel to the spool axis.

The gear wheel 29 is a component of a cable drum 27 onto which a cable 35 is rolled, the cable being partly shown in broken lines and being secured at one end to the piston 20 within the cylinder 41.

After triggering of the gas generator 17 the piston 20 moves downwardly in the cylinder 41. Through this, the lever 55 is first moved downwardly via the cable 35 and the gear wheel 28 is thereby brought into engagement with the drive pinion 23 of the spool 13. The rotation of the cable drum 29 brought about by the further movement of the piston 20 is converted via the gear wheel 28 into a rotation of the drive pinion 23 and thus into a rotation of the spool 13 in the belt take-up direction: The belt is tensioned.

The two gas generators 17 are triggered simultaneously so that, as a result of the like construction of the drive trains, the spool 13 is brought into engagement at its two axial ends with the respective gear wheels 28 in synchronized manner. At the same time, as a result of the drive pinion 23 being loaded by the pivotal levers 55 from above, it is ensured that the spool 13 is moved downwardly via the drive pinion 23 which carries the blocking gears 53 and is thus moved out of engagement with the mating teeth 52 of the frame 51, should the spool 13 be located in its blocked position when the gas generator 17 are triggered.

The pivotal levers 55 are connected to a resetting device 56 which ensures that after belt tensioning has taken place the gear wheels 28 again move out of engagement with the drive pinion 23. The drive arrangement of the pretensioner in accordance with the invention thus releases the spool 13 again, which can thus enter without disturbance into the blocked position when, after belt tensioning has taken place, a tensile force is exerted on the belt and transferred to the spool 13, whereby the spool 13 is lifted and moved so that its blocking gears 53 enter into blocking engagement with the mating teeth 52 of the frame 51.

The belt in the region of the spool 13 and also the movement of the spool 13 which can be achieved by means of the pretensioner from the blocked position into the released position extend with at least a substantial component parallel to one another so that two oppositely directed torques can be exerted on the spool 13 via the belt on the one hand and via the pretensioner on the other hand, in order to ensure that the spool 13 is in the released position during the belt tensioning and can if necessary be moved into the released position and that the spool 13 can be moved by means of the belt into the blocked position.

Expressed simply, the pretensioner in accordance with the invention is designed and arranged such that it and the belt act to a certain degree opposite to one another and can move the spool 13 in opposite directions, the spool 13 being capable of being moved in translation as a result of its floating mounting.

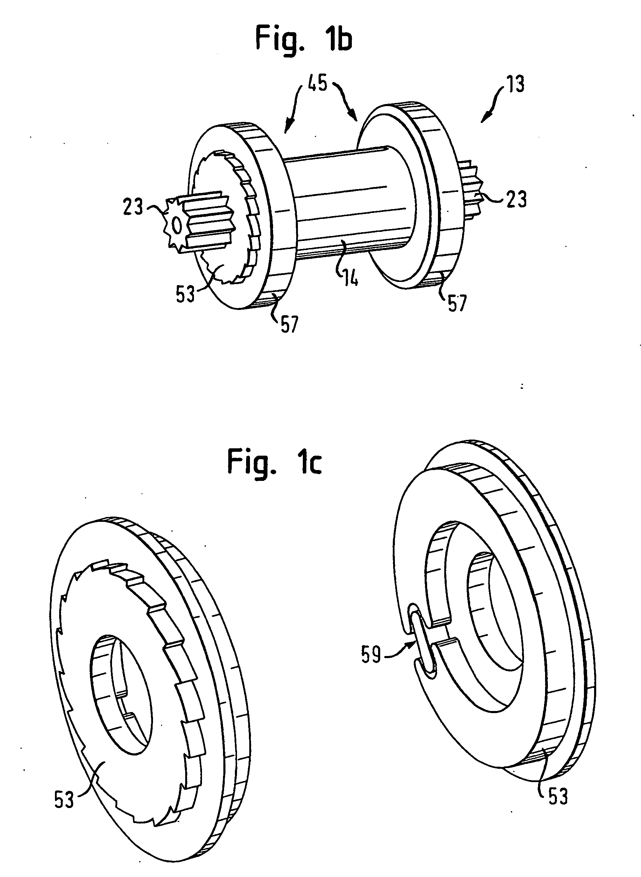

The Figs. 1b and 1c show the spool 13 and a load limiting device 45 associated with the spool 13. The blocking gears 53 (Fig. 1c) provided with the blocking teeth are not directly connected to the through-going drive pinion 23 of the spool 13 but rather in each case via a spool gear 57 rotationally fixedly coupled to the drive pinion 23.

The connection between the blocking gear 53 and the spool reel 57 takes place via a non-illustrated strip of material which forms a component of the load limiting device 45 and which is wound onto the blocking gear 53 and fixedly connected at one end to the spool 57. In this arrangement the material strip is guided through a labyrinth 59 formed at the blocking gear 53 which can fundamentally be of any desired design.

When a tension force is acting in the belt with the blocking gear 53 standing in blocking engagement with the frame 51, with the tension force attempting to rotate the spool reel 14 and thus the spool wheels 57 in the belt let-out direction, the material strip is drawn through the labyrinth 59, whereby not only friction forces oppose a rotary movement of the spool wheels 57 and thus of the spool body 14, but rather a progressive deformation work also has to be provided at the material strip. By corresponding design of the load limiting device 55, in particular of the material strip and of the labyrinth 59, the load limiting effect can be set as desired. A plurality of material strips can also be used simultaneously.

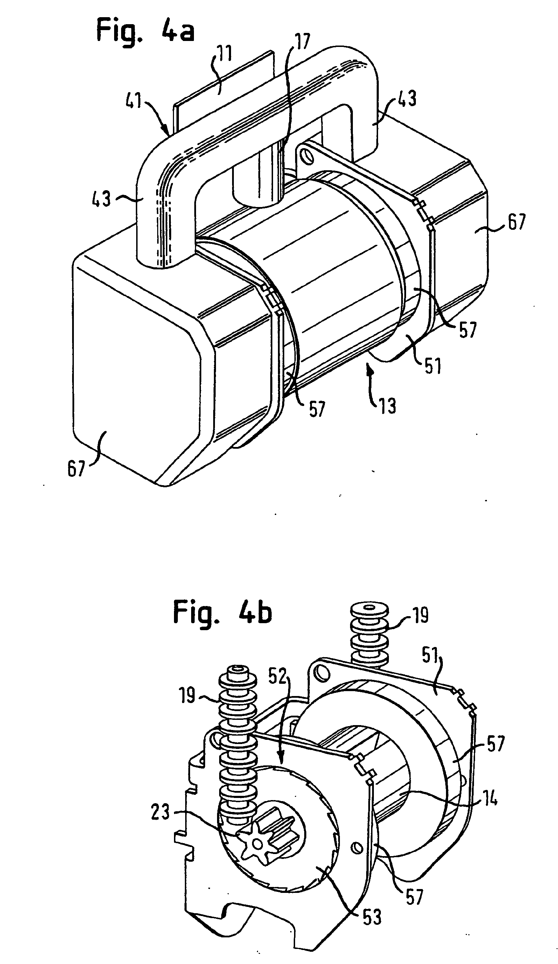

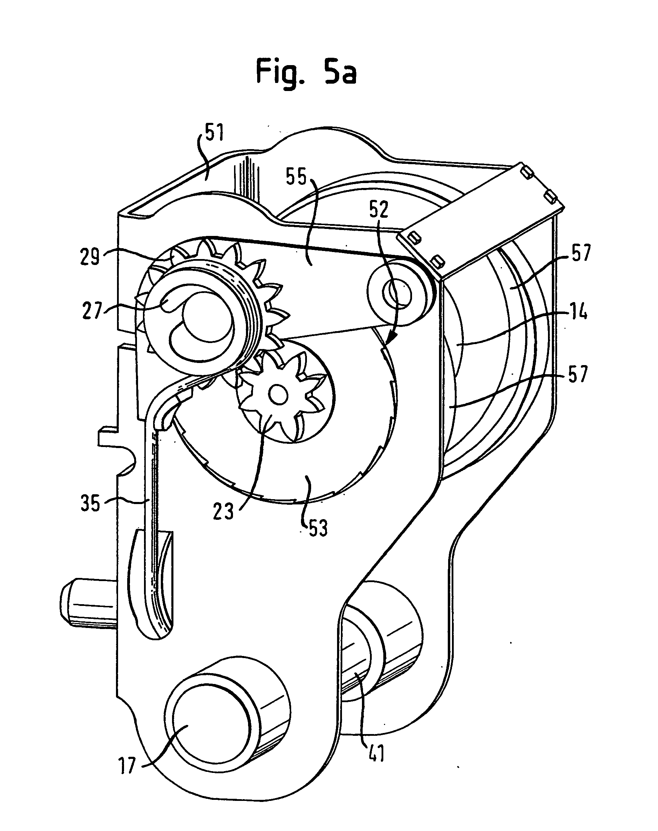

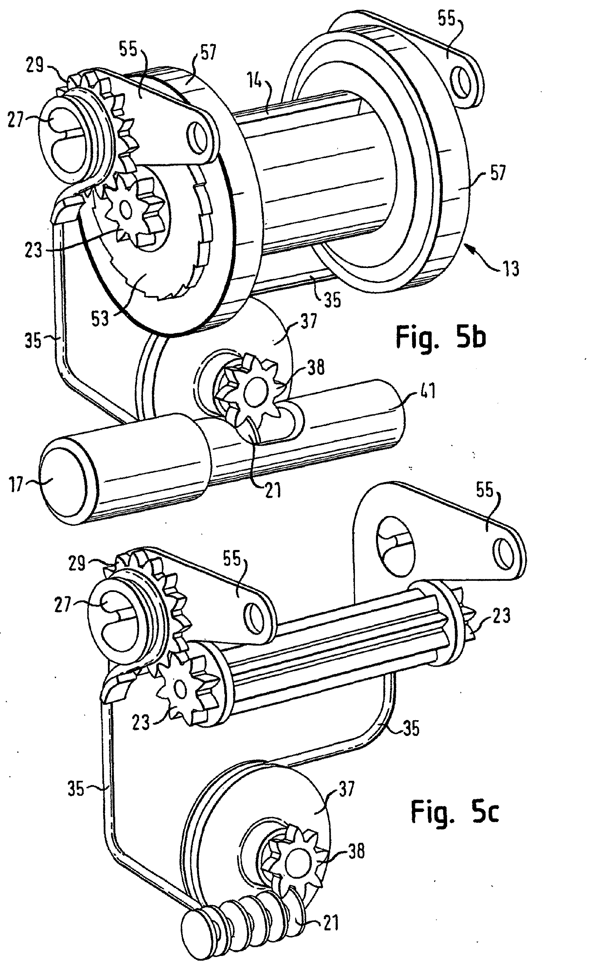

The above explanations apply - unless something different is mentioned - at least in the same sense also for the further embodiments of the invention which will be described in the following. A load limiting device based on the above explained principle is also provided in the safety apparatus described with reference to Figs. 4a and 4b and also to Figs. 5a - 5c.

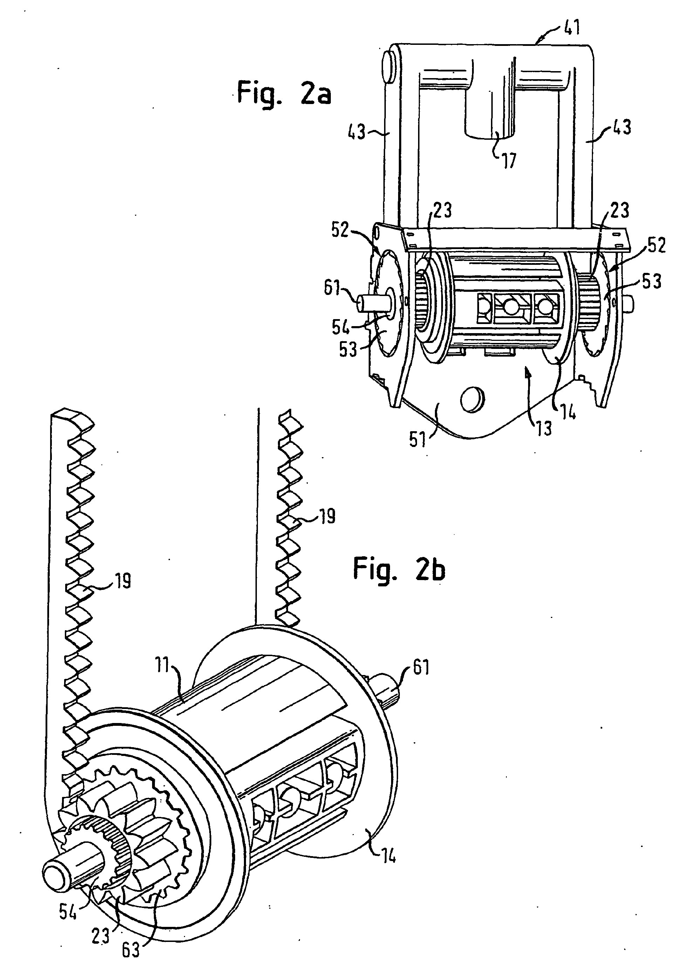

In the second embodiment of a safety apparatus of the invention in accordance with Figs. 2a - 2c no cable arrangement is provided. In contrast pistons 19 formed as racks each cooperate directly with a drive pinion 23 of the spool 13. Since, in this embodiment, a different load limiting device 45 is used; namely, a load limiting device incorporating a torsion bar 61, the spool construction also differs from that of the first embodiment.

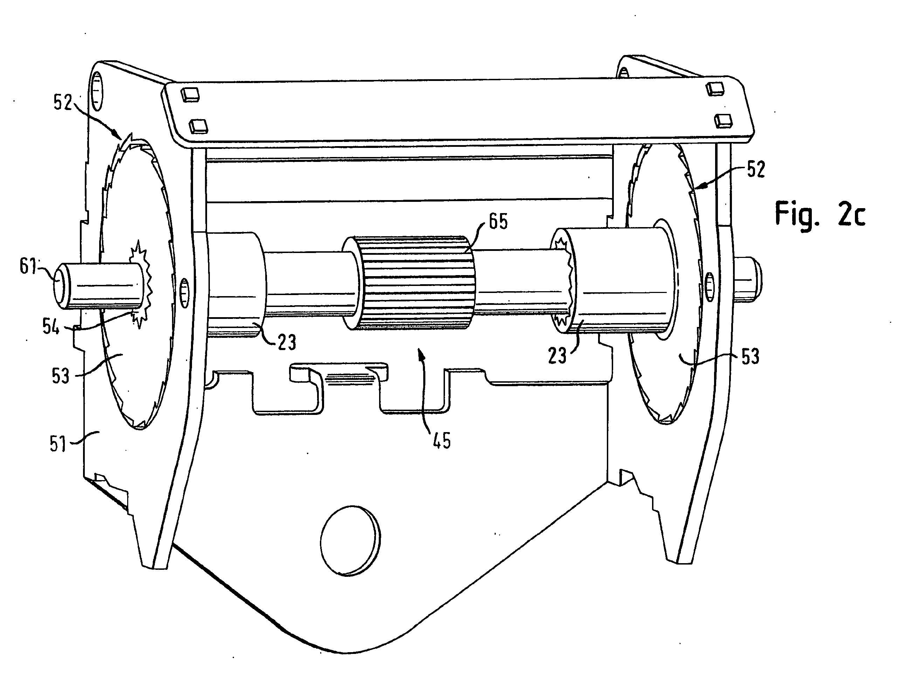

In addition to the torsion bar 61 the spool 13 has a spool reel 14, not illustrated in Fig. 2c which carries the belt winding and which is rotationally fixedly connected to the torsion bar 61 via a coupling gear wheel 65. The blocking gears 53 which cooperate with the frame 51 in accordance with the first embodiment are rotationally fixedly connected via pinions 54 to the torsion bar 61 which forms the spool axis. When the spool 13 is blocked by means of the blocking gears 53 the spool reel 14 can be rotated to a restricted degree in the belt let-out direction as a consequence of the twisting of the torsion bar 61 via the spool reel 14 and the coupling gear wheel 65.

The racks 19 (Figs. 2a and 2b) which serve as pistons and have a rectangular cross-section are each arranged in a cylinder section 43 with a correspondingly shaped internal cross-section. The two cylinder sections 43 are components of a closed essentially U-shaped cylinder system 41 in which moreover a gas generator 17 serving as a common drive source is arranged. The piston and cylinder system is arranged outside of a non-illustrated housing.

After triggering of the gas generator 17 the two racks 19 are loaded in the same manner and move downwardly as a result of the symmetrical construction of the drive arrangement. In this way the racks 19 enter into engagement with drive pinions 23 which are rotationally fixedly coupled to the spool reel 14 via toothed connecting rings 63. If necessary the spool 13 is hereby first moved downwardly as a whole and thus out of engagement with the mating teeth 52 of the frame 51, i.e. is moved out of the blocked position into the released position before the spool reel 14 is turned in the belt take-up direction. In this the torsion bar 61 is moved via the coupling gear wheel 65 by the spool reel 14 because the blocking gears 53 which are rotationally fixed connected to the torsion bar 61 are out of engagement with the mating teeth 52 of the frame 51.

A non-illustrated resetting device ensures that the racks 19 move out of engagement with the drive pinions 23 of the spool 13 again after belt tensioning has taken place, so that the pretensioner does not impair the remaining functionality of the safety apparatus. Corresponding resetting devices which serve the same purpose are also provided in the other embodiments.

The load limiting devices which are provided in the third and sixth embodiments described below are formed in accordance with the second embodiment.

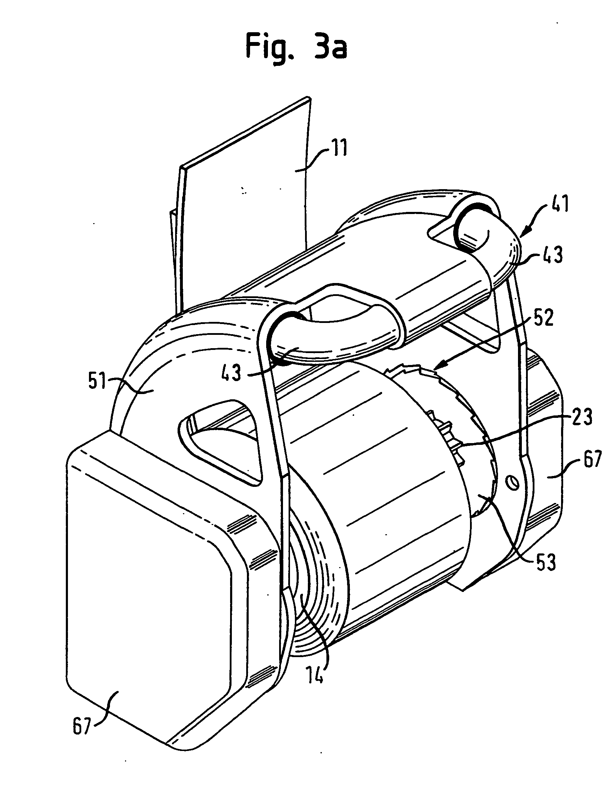

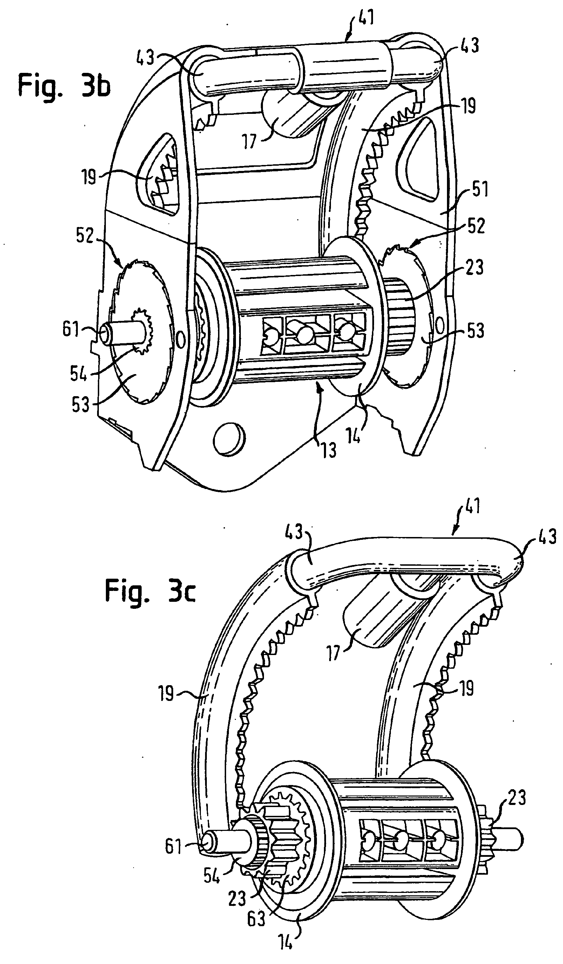

The Figs. 3a - 3c show a third embodiment of the invention which is characterized not only by its technical functionality but rather also by its particularly appealing external design.

The pretensioner is again based on a symmetrical piston and cylinder system with a common gas generator 17 as a drive source, with the cylinder sections 43 having a circular cross-section for the pistons 19 which are again formed as racks.

Here an inverse arrangement is also realized to the extent that the pistons 19 are themselves of sleeve-like design and are pushed at the side onto the cylinder sections 43. The toothed arrangements which cooperate with the drive pinions 23 are in each case formed in the manner of a comb-like projection on one side of the piston 19.

A special feature in comparison to the second embodiment lies in the curved shape of the cylinder sections 23 and of the racks 19. Not only can a particularly compact construction be realized in this way with at the same time ideal functionality but rather the curvature of the piston and cylinder arrangement also leads to a positive design effect which can be emphasized further by a corresponding design of the frame 51 and of the side covers 67 (Fig. 3a). Furthermore, a security against rotation is automatically provided by the curved shape of the racks 19.

In the fourth embodiment in accordance with Figs. 4a and 4b the piston and cylinder system is located outside of the frame 51. Moreover, the cylinder sections are made straight in accordance with the second embodiment. Furthermore, inwardly disposed pistons 19 are provided.

In distinction to the second embodiment the pistons 19 formed as racks and the cylinder sections 43 have a circular cross-section, with the racks 19 being formed by a plurality of spaced apart circular disks. Through this construction of the piston and cylinder arrangement the sealed nature of the drive system can be ensured in a particularly simple manner.

The fifth embodiment of the invention in accordance with Figs. 5a - 5c is characterized by a drive principle which makes use of a cable arrangement. Here, other than in the first embodiment, only a single drive source in the form of a gas generator 17 is provided, which drives a single piston 21 (Figs. 5b and 5c) arranged in a cylinder 41 and formed as a rack in accordance with the fourth embodiment.

The rack 21 cooperates with a pinion 38, which is rotationally fixedly connected to a drive drum 37 on which two cables 35 can be simultaneously rolled up. The cables 35 are each rolled onto a cable drum 27 which is provided with a gear wheel 29 in accordance with the first embodiment and is mounted on a pivotal lever 55 which is pivotable about an axis extending parallel to and offset from the spool axis.

After triggering of the gas generator 17 and at the start of the common rolling up movement of the drive drum 37 the two pivotal levers 55 are first pivoted downwardly in synchronized manner via the two cables 35 and hereby move the two gear wheels 29 into engagement with the drive pinion 23 of the spool 13. At the same time the spool 13 is, if necessary, moved as a whole via the drive pinion 23 by means of the gear wheels 29 of the pivot levers 35 out of the blocked position into the released position.

Through further rolling up of the cables 35 onto the common drive drum 37 the cable drums 27 are turned further in the cable let-out direction whereby the spool 13 is turned via the drive pinions 23 in the belt take-up direction and the belt is thus tensioned.

In the Figs. 5a - 5c a possibility for guiding the cables 35 is shown purely by way of example in order to illustrate the principle underlying this fifth embodiment. The cable guidance can basically be effected in any desired manner.

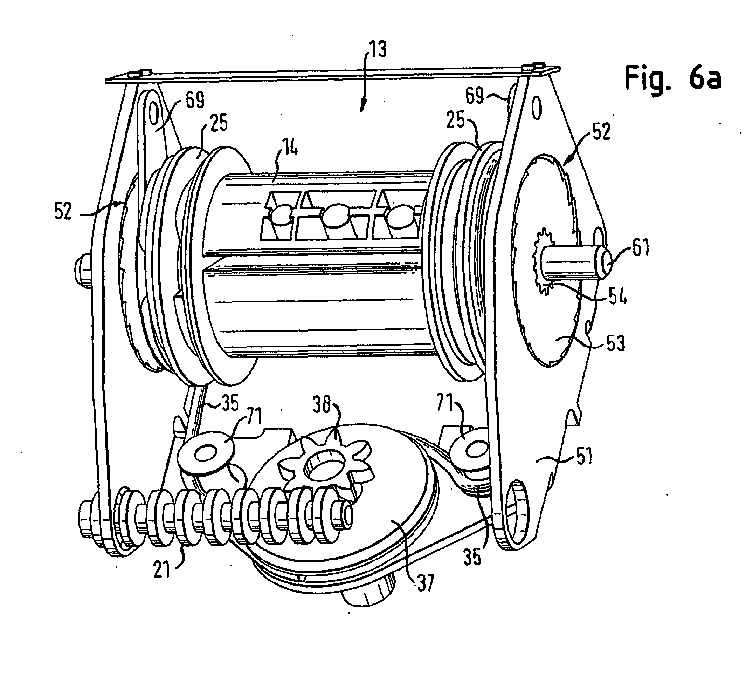

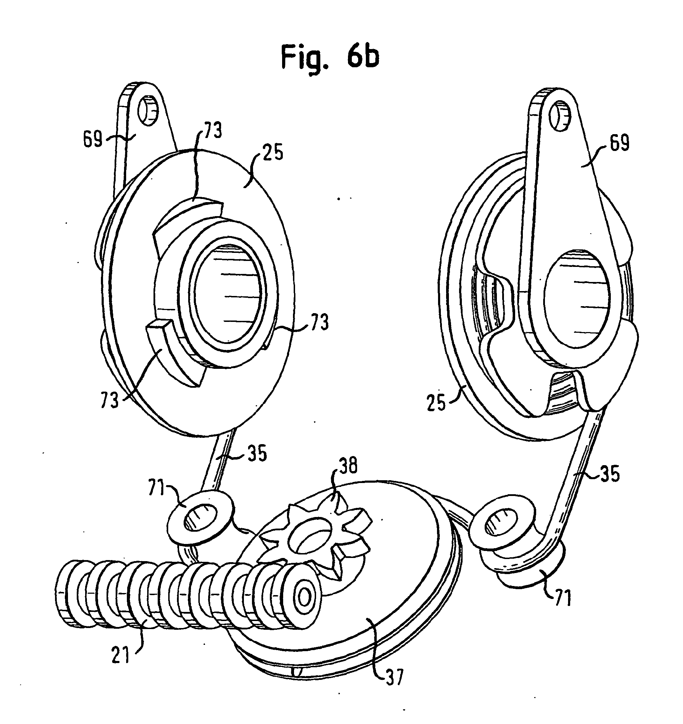

The above described embodiments are characterized amongst other things in that the engagement movement of the drive arrangement into engagement with the spool 13 takes place in the radial or tangential direction with respect to the spool axis. In contrast, in the sixth embodiment of the invention in accordance with Figs. 6a - 6d, the engagement movement takes place in the axial direction.

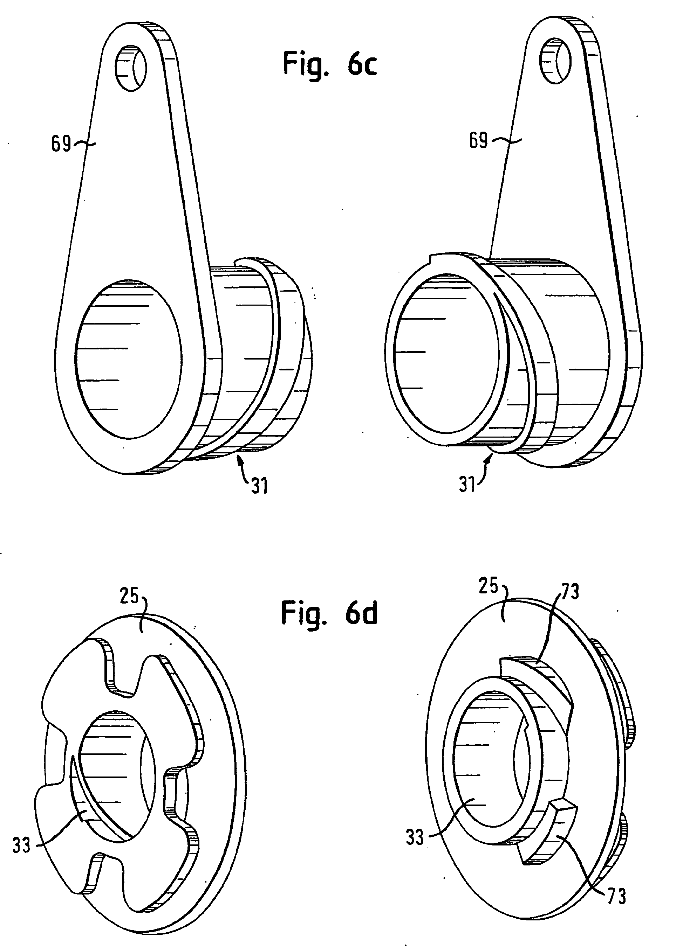

For this purpose a respective carrier 69 (Fig. 6c) and a cable drum 25 (Fig. 6d) are provided at both sides of the spool reel 14, concentric to the torsion rod 61 forming the spool axis. The cable drums 25 each sit on a spigot which projects in the axial direction from a base plate of the carrier 69, with the spigot being provided with an external thread 31 which cooperates with a corresponding counter thread 33 on the inner side of the cable drum 25.

The carriers 69, which are pivotally mounted on the frame 51 (Fig. 6a), simultaneously serve as a holder for the spool 13, whereby the spool 13 can be pivoted as a whole relative to the frame 51 between the blocked position and the released position.

In accordance with the fifth embodiment, after the triggering of the non-illustrated gas generator, the two cable drums 25 are set rotating via the piston formed as a rack 21, which cooperates with a common drive drum 37 provided with a pinion 38 and also via the cables 35 guided over deflection rollers 71. The spool can, if required, be pivoted prior to this out of the blocked position in the released position by means of the cable 31.

As a result of the screw connection formed by the two cooperating thread sections 31, 33 the initial rotation of the cable drums 25 is in each case converted into an axial movement of the cable drums 25 and indeed in the direction towards the confronting outer end faces of the spool reel 14. The two cable drums 25 are thus moved towards one another in synchronized manner.

The end of this axial movement is in each case achieved as soon as the cable drum 25 and the spool reel 14 enter into engagement at the end face. At the end of the axial engagement movement the spool reel 14 is moved with the cable drums 25, which continue to be rotated via the common drive drum 37, via engagement wedges 73 which are uniformly distributed in the peripheral direction at the inner side of the cable drums 25 and corresponding counter wedges on the outer end faces of the spool reel 14, whereby the spool 13 is turned in the belt take-up direction and the belt slackness is removed.

In order to permit a movement of the spool between the blocked position and the released position in normal operation the cables of the cable arrangement are provided with a certain sag in the fifth and sixth embodiments which does not, however, impair the functionality of the pretensioner.

### Reference numeral list

- 11: safety belt
- 13: spool
- 14: spool reel
- 17: drive source, gas generator
- 19: rack or piston for direct spool driving
- 20: piston
- 21: rack or piston for cable arrangement
- 23: drive pinion
- 25: cable drum for axial engagement
- 27: cable drum for radial or tangential engagement
- 28: gear wheel
- 29: gear wheel of the cable drum
- 31: thread
- 33: counter thread
- 35: cable
- 37: common drive drum
- 38: pinion of the common drive drum
- 41: cylinder
- 43: cylinder section
- 45: load limiting device
- 51: frame
- 52: meshing teeth
- 53: blocking gear
- 54: pinion for blocking gear
- 56: resetting device
- 55: pivotal lever
- 57: spool wheel
- 59: labyrinth
- 61: torsion bar
- 63: toothed connecting ring
- 65: toothed coupling wheel
- 67: cover
- 69: cover for cable drum
- 71: deflection roller
- 73: engagement wedge

## Claims

1. Safety apparatus, in particular for motor vehicles, having
- a safety belt (11),
- a spool (13) movable between a blocked position and a released position for the winding up and unwinding of the belt (11), and
- a pretensioner which is drivably connected to the spool (13) in the winding up direction,
wherein the pretensioner has a drive arrangement by which the spool (13) can be set rotating at two engagement positions spaced apart along the spool axis,
**characterized in that**
a common drive source (17) is provided for two drive trains which can each be brought into engagement with one of the engagement positions of the spool (13).

2. Safety apparatus in accordance with claim 1,
**characterized in that**
the points of engagement are arranged at the axial end regions of the spool (13).

3. Safety apparatus in accordance with claim 1 or claim 2,
**characterized in that**
the spool (13) is held in the released position by means of the engaged drive arrangement.

4. Safety apparatus in accordance with any one of the preceding claims,
**characterized in that**
the spool (13) is movable from the blocked position into the released position by means of the drive arrangement entering into engagement.

5. Safety apparatus in accordance with any one of the preceding claims,
**characterized in that**
an engagement movement of the drive arrangement into the spool (13) takes place in the radial direction or in the tangential direction:

6. Safety apparatus in accordance with any one of the claims 1 to 4,
**characterized in that**
an engagement movement of the drive arrangement into the spool (13) takes place in the axial direction.

7. Safety apparatus in accordance with any one of the preceding claims,
**characterized in that**
the pretensioner stands out of engagement with the spool (13) in a normal operating state.

8. Safety apparatus in accordance with any one of the preceding claims,
**characterized in that**
the pretensioner can be controlled to move out of engagement with the spool (13) after pretensioning has taken place.

9. Safety apparatus in accordance with any one of the preceding claims,
**characterized in that**
the drive arrangement has at least drivable rack (19, 21) the movement of which can be converted into a rotation of the spool (13), with the spool (13) or a drive pinion (23) sitting on the spool axle or forming the spool axle being capable of being set into rotation either directly or via a cable arrangement, preferably by means of the rack (19,21).

10. Safety apparatus in accordance with any one of the preceding claims,
**characterized in that**
the drive arrangement has a drivable cable arrangement with which at least one cable drum (25, 27) capable of being brought into engagement with the spool (13) directly or via a gear arrangement (23, 28, 29) is rotatable in the cable let-out direction.

11. Safety apparatus in accordance with any one of the preceding claims,
**characterized in that**
the cable drum (27) can be brought into engagement with the spool (13) by pivotal movement about an axis extending parallel to and offset from the spool axis.

12. Safety apparatus in accordance with any one of the claims 1 to 10,
**characterized in that**
the cable drum (25) can be brought into engagement with the spool (13) by means of the cable arrangement by an axial movement along the spool axis.

13. Safety apparatus in accordance with claim 12,
**characterized in that**
the cable drum (25) and the spool (13) are arranged concentric to one another.

14. Safety apparatus in accordance with claim 12 or 13,
**characterized in that**
an initial rotary movement of the cable drum (25) can be converted via a screw connection (31, 33) into the axial movement of the cable drum (25).

15. Safety apparatus in accordance with any one of the preceding claims,
**characterized in that**
the cable arrangement includes two cable drums (25, 27) which can be brought into engagement with the spool (13), which stand in connection with a common drive drum (37) via the cable (35) and which can be set rotating in the cable let-out direction by means of the drive drum (37) which is set rotating in the cable take-up direction.

16. Safety apparatus in accordance with any one of the preceding claims,
**characterized in that**
the drive arrangement includes at least one gas generator (17) arranged in a piston in cylinder system (19, 20, 21, 41) as a drive source.

17. Safety apparatus in accordance with claim 16,
**characterized in that**
the piston (19, 21) which can be driven by means of the gas generator (17) is formed as a rack.

18. Safety apparatus in accordance with claim 16 or 17,
**characterized in that**
the piston (20), which can be driven by means of the gas generator (17), is connected to a draw cable arrangement.

19. Safety apparatus in accordance with any one of the preceding claims,
**characterized in that**
the drive arrangement includes a piston in cylinder system (19, 21, 41) which is in particular symmetrically designed, the system including two pistons (19) which are respectively arranged at a cylinder section (43) and a common gas generator (17) communicating with the two cylinder sections (43).

20. Safety apparatus in accordance with any one of the preceding claims,
**characterized in that**
a load limiting device (45) is provided which in a blocking position permits a restricted rotation of the spool (13).

21. Safety apparatus in accordance with claim 20,
**characterized in that**
the load limiting device (45) and the pretensioner cooperate with the spool (13) independently of one another.

## Patentansprüche

1. Sicherheitseinrichtung, insbesondere für Kraftfahrzeuge, mit
- einem Sicherheitsgurt (11),
- einer zwischen einer Blockierstellung und einer Freigabestellung bewegbaren Spule (13) zum Aufwickeln und Abwickeln des Gurtes (11), und
- einer Vorspanneinrichtung, mit der die Spule (13) in Aufwickelrichtung antreibbar ist,
wobei die Vorspanneinrichtung eine Antriebsanordnung aufweist, mit der die Spule (13) an zwei längs der Spulenachse beabstandeten Eingriffsstellen in Rotation versetzbar ist,
**dadurch gekennzeichnet,**
**dass** eine gemeinsame Antriebsquelle (17) für zwei jeweils mit einer der Eingriffsstellen der Spule (13) in Eingriff bringbare Antriebsstränge vorgesehen ist.

2. Sicherheitseinrichtung nach Anspruch 1,
**dadurch gekennzeichnet,**
**dass** die Eingriffsstellen an den axialen Endbereichen der Spule (13) angeordnet sind.

3. Sicherheitseinrichtung nach Anspruch 1 oder 2,
**dadurch gekennzeichnet,**
**dass** die Spule (13) mittels der in Eingriff befindlichen Antriebsanordnung in der Freigabestellung gehalten ist.

4. Sicherheitseinrichtung nach einem der vorhergehenden Ansprüche,
**dadurch gekennzeichnet,**
**dass** Spule (13) mittels der in Eingriff gelangenden Antriebsanordnung von der Blockierstellung in die Freigabestellung bewegbar ist.

5. Sicherheitseinrichtung nach einem der vorhergehenden Ansprüche,
**dadurch gekennzeichnet,**
**dass** eine Einsteuerbewegung der Antriebsanordnung in die Spule (13) in radialer oder tangentialer Richtung erfolgt.

6. Sicherheitseinrichtung nach einem der Ansprüche 1 bis 4,
**dadurch gekennzeichnet,**
**dass** eine Einsteuerbewegung der Antriebsanordnung in die Spule (13) in axialer Richtung erfolgt.

7. Sicherheitseinrichtung nach einem der vorhergehenden Ansprüche,
**dadurch gekennzeichnet,**
**dass** die Vorspanneinrichtung in einem Normalbetriebszustand außer Eingriff mit der Spule (13) steht.

8. Sicherheitseinrichtung nach einem der vorhergehenden Ansprüche,
**dadurch gekennzeichnet,**
**dass** die Vorspanneinrichtung nach erfolgter Vorspannung außer Eingriff mit der Spule (13) steuerbar ist.

9. Sicherheitseinrichtung nach einem der vorhergehenden Ansprüche,
**dadurch gekennzeichnet,**
**dass** die Antriebsanordnung wenigstens eine antreibbare Zahnstange (19, 21) aufweist, deren Bewegung in eine Rotation der Spule (13) umsetzbar ist, wobei vorzugsweise mit der Zahnstange (19, 21) die Spule (13) oder ein auf der Spulenachse sitzendes oder die Spulenachse bildendes Antriebsritzel (23) entweder direkt oder über eine Seilzuganordnung in Rotation versetzbar ist.

10. Sicherheitseinrichtung nach einem der vorhergehenden Ansprüche,
**dadurch gekennzeichnet,**
**dass** die Antriebsanordnung eine antreibbare Seilzuganordnung aufweist, mit der zumindest eine direkt oder über eine Zahnradanordnung (23, 28, 29) mit der Spule (13) in Eingriff bringbare Seiltrommel (25, 27) in Seilausgaberichtung drehbar ist.

11. Sicherheitseinrichtung nach einem der vorhergehenden Ansprüche,
**dadurch gekennzeichnet,**
**dass** die Seiltrommel (27) durch Verschwenken um eine parallel versetzt zur Spulenachse verlaufende Achse mittels der Seilzuganordnung in Eingriff mit der Spule (13) steuerbar ist.

12. Sicherheitseinrichtung nach einem der Ansprüche 1 bis 10,
**dadurch gekennzeichnet,**
**dass** die Seiltrommel (25) durch eine axiale Bewegung längs der Spulenachse mittels der Seilzuganordnung in Eingriff mit der Spule (13) steuerbar ist.

13. Sicherheitseinrichtung nach Anspruch 12,
**dadurch gekennzeichnet,**
**dass** die Seiltrommel (25) und die Spule (13) konzentrisch zueinander angeordnet sind.

14. Sicherheitseinrichtung nach Anspruch 12 oder 13,
**dadurch gekennzeichnet,**
**dass** eine anfängliche Drehbewegung der Seiltrommel (25) über eine Verschraubung (31, 33) in die Axialbewegung der Seiltrommel (25) umsetzbar ist.

15. Sicherheitseinrichtung nach einem der vorhergehenden Ansprüche,
**dadurch gekennzeichnet,**
**dass** die Seilzuganordnung zwei mit der Spule (13) in Eingriff bringbare Seiltrommeln (25, 27) umfasst, die über das Seil (35) mit einer gemeinsamen Antriebstrommel (37) in Verbindung stehen und die mittels der in Seilaufnahmerichtung in Drehung versetzten Antriebstrommel (37) in Seilausgaberichtung drehbar sind.

16. Sicherheitseinrichtung nach einem der vorhergehenden Ansprüche,
**dadurch gekennzeichnet,**
**dass** die Antriebsanordnung als Antriebsquelle wenigstens einen in einem Kolben-/Zylinder-System (19, 20, 21, 41) angeordneten Gas-generator (17) umfasst.

17. Sicherheitseinrichtung nach Anspruch 16,
**dadurch gekennzeichnet,**
**dass** der mittels des Gasgenerators (17) antreibbare Kolben (19, 21) als Zahnstange ausgebildet ist.

18. Sicherheitseinrichtung nach Anspruch 16 oder 17,
**dadurch gekennzeichnet,**
**dass** der mittels des Gasgenerators (17) antreibbare Kolben (20) mit einer Zugseilanordnung verbunden ist.

19. Sicherheitseinrichtung nach einem der vorhergehenden Ansprüche,
**dadurch gekennzeichnet,**
**dass** die Antriebsanordnung ein insbesondere symmetrisch ausgebildetes Kolben-/Zylinder-System (19, 21, 41) umfasst, das zwei jeweils an einem Zylinderabschnitt (43) angeordnete Kolben (19) und einen gemeinsamen, mit beiden Zylinderabschnitten (43) in Verbindung stehenden Gasgenerator (17) umfasst.

20. Sicherheitseinrichtung nach einem der vorhergehenden Ansprüche,
**dadurch gekennzeichnet,**
**dass** eine Lastbegrenzungseinrichtung (45) vorgesehen ist, die in der Blockierstellung eine begrenzte Rotation der Spule (13) zulässt.

21. Sicherheitseinrichtung nach Anspruch 20,
**dadurch gekennzeichnet,**
**dass** die Lastbegrenzungseinrichtung (45) und die Vorspanneinrichtung unabhängig voneinander mit der Spule (13) zusammenwirken.

## Revendications

1. Dispositif de sécurité, en particulier pour véhicules à moteur, comprenant :
-- une ceinture de sécurité (11),
-- une bobine (13) mobile entre une position bloquée et une position relâchée pour enrouler et pour dérouler la ceinture (11), et
-- un prétensionneur qui est connecté en termes d'entraînement à la bobine (13) dans la direction de l'enroulement,
dans lequel le prétensionneur comprend un agencement d'entraînement au moyen duquel la bobine (13) peut être mise en rotation à deux positions d'engagement espacées le long de l'axe de la bobine,
**caractérisé en ce que**
il est prévu une source d'entraînement commune (17) pour deux trains d'entraînement qui peuvent être amenés chacun en engagement avec l'une des positions d'engagement de la bobine (13).

2. Dispositif de sécurité selon la revendication 1,
**caractérisé en ce que**
les points d'engagement sont agencés au niveau des régions axiales terminales de la bobine (13).

3. Dispositif de sécurité selon la revendication 1 ou 2,
**caractérisé en ce que**
la bobine (13) est tenue dans la position relâchée au moyen de l'agencement d'entraînement engagé.

4. Dispositif de sécurité selon l'une quelconque des revendications précédentes,
**caractérisé en ce que**
la bobine (13) est mobile de la position bloquée à la position relâchée au moyen de l'agencement d'entraînement qui entre en engagement.

5. Dispositif de sécurité selon l'une quelconque des revendications précédentes,
**caractérisé en ce que**
un mouvement d'engagement de l'agencement d'entraînement dans la bobine (13) se produit dans la direction radiale ou dans la direction tangentielle.

6. Dispositif de sécurité selon l'une quelconque des revendications 1 à 4,
**caractérisé en ce que**
un mouvement d'engagement de l'agencement d'entraînement dans la bobine (13) se produit dans la direction axiale.

7. Dispositif de sécurité selon l'une quelconque des revendications précédentes,
**caractérisé en ce que**
le prétensionneur se trouve hors de l'engagement avec la bobine (13) dans un état de fonctionnement normal.

8. Dispositif de sécurité selon l'une quelconque des revendications précédentes,
**caractérisé en ce que**
le prétensionneur peut être commandé pour se déplacer hors de l'engagement avec la bobine (13) après que le prétensionnement a eu lieu.

9. Dispositif de sécurité selon l'une quelconque des revendications précédentes,
**caractérisé en ce que**
l'agencement d'entraînement comprend au moins un une crémaillère entraînée (19, 21) dont le mouvement peut être converti en une rotation de la bobine (13), la bobine (13) ou un pignon d'entraînement (23) reposant sur l'axe de bobine ou formant l'axe de bobine étant capable d'être un mis en rotation soit directement soit via un agencement à un câble, de préférence au moyen de la crémaillère (19, 21).

10. Dispositif de sécurité selon l'une quelconque des revendications précédentes,
**caractérisé en ce que**
l'agencement d'entraînement comprend un agencement à câble entraîné avec lequel au moins un tambour à un câble (25, 27), capable d'être amené en engagement avec la bobine (13) directement ou via un agencement à engrenage (23, 28, 29), est capable de rotation dans la direction de sortie du câble.

11. Dispositif de sécurité selon l'une quelconque des revendications précédentes,
**caractérisé en ce que**
le tambour à câble (27) peut être amené en engagement avec la bobine (13) par mouvement de pivotement autour d'un axe qui s'étend parallèlement à l'axe de bobine et décalé de celui-ci.

12. Dispositif de sécurité selon l'une quelconque des revendications 1 à 10,
**caractérisé en ce que**
le tambour à câble (25) peut être amené en engagement avec la bobine (13) au moyen de l'agencement à câble par un mouvement axial le long de l'axe de la bobine.

13. Dispositif de sécurité selon la revendication 12,
**caractérisé en ce que**
le tambour à câble (25) et la bobine (13) sont agencés concentriques l'un à l'autre.

14. Dispositif de sécurité selon la revendication 12 ou 13,
**caractérisé en ce que**
un mouvement de rotation initiale du tambour à câble (25) peut être converti avec une connexion à vis (31, 33) pour donner le mouvement axial du tambour à câble (25).

15. Dispositif de sécurité selon l'une quelconque des revendications précédentes,
**caractérisé en ce que**
l'agencement à câble inclut deux tambours à câble (25, 27) qui peuvent être amenés en engagement avec la bobine (13), laquelle se trouve en connexion avec un tambour d'entraînement commun (37) via le câble (35) et peut être mise en rotation dans la direction de sortie du câble au moyen du tambour d'entraînement (37) qui est mis en rotation dans la direction d'enroulement du câble.

16. Dispositif de sécurité selon l'une quelconque des revendications précédentes,
**caractérisé en ce que**
l'agencement d'entraînement inclut au moins un générateur de gaz (17) agencé dans un piston dans un système à cylindre (19, 20, 21, 41) à titre de source d'entraînement.

17. Dispositif de sécurité selon la revendication 16,
**caractérisé en ce que**
le piston (19, 21) qui peut être entraîné au moyen du générateur de gaz (17) est formé comme une crémaillère.

18. Dispositif de sécurité selon la revendication 16 ou 17,
**caractérisé en ce que**
le piston (20), qui peut être entraîné au moyen du générateur de gaz (17), est connecté à un agencement à un câble tiré.

19. Dispositif de sécurité selon l'une quelconque des revendications précédentes,
**caractérisé en ce que**
l'agencement d'entraînement inclut un piston dans un système à cylindre (19, 21, 41) qui est en particulier conçu de façon symétrique, le système incluant deux pistons (19) qui sont respectivement agencés au niveau d'un tronçon de cylindre (43) et un générateur de gaz (17) commun qui communique avec les deux tronçons de cylindre (43).

20. Dispositif de sécurité selon l'une quelconque des revendications précédentes,
**caractérisé en ce que**
il est prévu un dispositif de limitation de charge (45) qui, dans une position de blocage, permet une rotation restreinte de la bobine (13).

21. Dispositif de sécurité selon la revendication 20,
**caractérisé en ce que**
le dispositif de limitation de charge (45) et le prétensionneur coopèrent avec la bobine (13) indépendamment l'un de l'autre.
